# EUROPEAN PATENT APPLICATION

(11) **EP 2 800 050 A1**
(43) Date of publication of application: **05.11.2014**
(21) Application number: 14166811.1
(22) Date of filing: 01.05.2014
(51) Int. Cl.: G06Q 40/02

(54) **System, Method, and Apparatus for Processing Applications**

(30) Priority: 02.05.2013 WO PCT/EP2013/059171
(71) Applicant: Broadway Financial Technology Limited, London W1U 6AG (GB)
(72) Inventor: McKenzie, Iain, London, SW3 3JY Greater London (GB)
(74) Representative: Ruuskanen, Juha-Pekka

(57) **Abstract**

Systems, methods, apparatuses, and computer program products for automatic processing of applications are provided. One method includes receiving an electronic application form comprising credentials of an applicant, retrieving, based on the credentials, a certain number of transactions for the applicant from at least one database and categorizing the transactions into a plurality of categories by searching the for keywords. A soft policy decision is then performed on the electronic application form based on the categorization to reject or tentatively approve the application. When the application passes the soft policy decision a scorecard decision is performed to assign a score to the applicant and categorizing the applicant according to the score. The electronic application is accepted or rejected based on the score categorization.

## Description

Embodiments generally relate to systems, methods, and apparatuses for automatically processing electronic applications.

Applications can be filed electronically for various purposes. For example, electronic applications can be filed for the purposes of banking products, for security clearances, for planning and/or building consents and so on.

In accordance with a specific example an application can be made to credit a customer's bank account in order, for example, to avoid an overdraft. An overdraft situation may arise when funds are withdrawn from a bank account and the available balance in the account falls below zero (i.e., negative balance). In this situation, the account is then considered to be overdrawn. Assuming the amount overdrawn is beyond the overdraft limit, then the bank will charge the customer interest at an agreed rate. In some situations, if the negative balance exceeds a certain amount, then additional fees may be charged by the bank and even higher interest rates may apply.

One embodiment includes a method in a computerized application processing system, comprising receiving an electronic application form comprising credentials of an applicant, retrieving, based on the credentials, a certain number of transactions for the applicant from at least one database, categorizing the transactions into a plurality of categories by searching the transactions for keywords, performing a soft policy decision on the electronic application form based on the categorization to reject or tentatively approve the application, when the application passes the soft policy decision performing a scorecard decision to assign a score to the applicant and categorizing the applicant according to the score, and accepting or rejecting the electronic application based on the score categorization.

Another embodiment is directed to an apparatus comprising at least one processor and at least one memory comprising computer program code, the at least one memory and the computer program code configured, with the at least one processor, to cause the apparatus at least to receive an electronic application form comprising credentials of an applicant, retrieve, based on the credentials, a certain number of transactions for the applicant from at least one database, categorize the transactions into a plurality of categories by searching the transactions for keywords, perform a soft policy decision based on the categorization on the electronic application form to reject or tentatively approve the application, and when the application passes the soft policy decision, perform a scorecard decision to assign a score to the applicant and categorize the applicant according to the score, and accept or reject the electronic application based on the score categorization.

Another embodiment is directed to a computer program, embodied on a computer readable medium, wherein the computer program is configured to control a processor to perform a process as defined above.

For proper understanding of the invention, reference should be made to the accompanying drawings, wherein:
Fig. 1 illustrates a flow diagram of a method, according to one embodiment;
Fig. 2 illustrates a diagram of a system, according to an embodiment;
Fig. 3 illustrates a flow diagram of a method, according to another embodiment;
Fig. 4 illustrates a flow diagram of a method, according to another embodiment;
Fig. 5 illustrates a flow diagram of a method, according to another embodiment;
Fig. 6 illustrates a flow diagram of a method, according to another embodiment; and
Fig. 7 illustrates an apparatus, according to one embodiment.

In the following detailed description computerized application processing is described with reference to banking applications. However, this is used as an illustrative example of receiving and processing an electronic application form comprising credentials of an applicant, where the credentials are used to obtain a certain number of transactions for the applicant from at least one database, and where the transactions are categorized into a plurality of categories by searching the transactions for keywords. In accordance with an aspects an initial or soft policy decision is made on the electronic application form based on the categorization to reject or tentatively approve the application so that unsuitable applicants are screened out, and when the application passes the soft policy decision a scorecard decision is then performed to assign a score to the applicant and categorizing the applicant according to the score. The electronic application can then be finally accepted or rejected based on the score categorization.

It will be readily understood that the components of the invention, as generally described and illustrated in the figures herein, may be arranged and designed in a wide variety of different configurations. Thus, the following detailed description of the certain embodiments of systems, methods, apparatuses, and computer program products for providing a short term credit line as represented in the attached figures, is not intended to limit the scope of the invention, but is merely representative of selected embodiments of the invention.

If desired, the different functions discussed below may be performed in a different order and/or concurrently with each other. Furthermore, if desired, one or more of the described functions may be optional or may be combined. As such, the following description should be considered as merely illustrative of the principles, teachings and embodiments of this invention, and not in limitation thereof.

One embodiment is directed to a system including at least one processor and at least one memory configured to store, for example, computer program code. The at least one memory including the computer program code, together with the at least one processor, may be configured to control the system to receive an application form including banking credentials from an applicant. The system may then be controlled to receive or retrieve, using the banking credentials, the current balance and a certain number of days (e.g., 60 or 90 days) worth of transactions for the applicant from a database or the applicant's bank account. In an embodiment, the system can be further controlled to categorize the transactions into a plurality of categories (e.g., overdraft fees, credit cards, deposits, gambling, loans) by searching the transactions for keywords, and to perform an affordability assessment to reject applications that cannot afford to repay in a sustainable manner.

If the applicant passes the affordability assessment, the system may be controlled to perform a score card decision to assign a score to the customer and categorize the application according to the score, and to finally accept or reject the application based on their score categorization. If the application is accepted, the system may periodically calculate a credit limit for the customer, and may also perform a daily refresh to update the latest (e.g., 24 or 48 hours) transactions and to update the current balance for the customer. In one embodiment, the daily refresh can be synchronized to perform, for example, at least 1-2 hours before the customer's bank schedules the charging of overdraft fees.

Further, according to an embodiment, when the daily refresh shows that the customer's current balance has fallen below a predetermined level where the customer's bank charges overdraft fees, the system is configured to automatically deposit funds (e.g., based on the calculated credit limit) into the customer's account. Subsequently, when the daily refresh shows that new funds have entered the customer's current account, the system is configured to calculate the repayment amount and automatically attempt to withdraw funds in order to repay the outstanding balance.

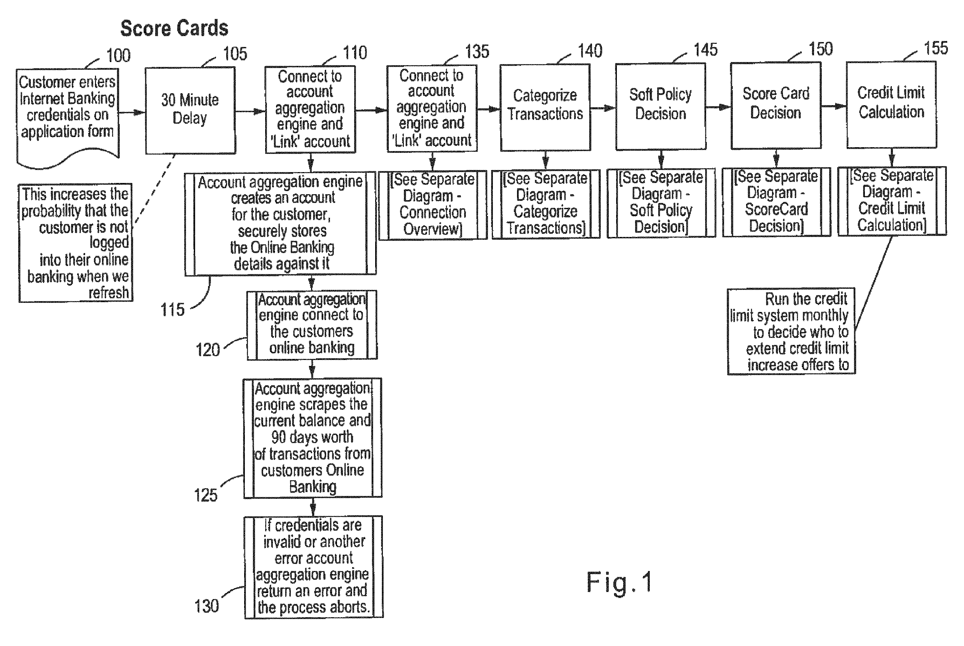

Fig. 1 illustrates an example of a flow diagram of a process, according to one embodiment. As illustrated in Fig. 1, at 100, an applicant enters their internet banking credentials on an application form. In an embodiment, the application form may be an electronic application form displayed, for example, in a user interface of a website. At 105, a thirty minute delay is observed in order to increase the likelihood that the applicant is not logged into their online banking system. At 110, the process includes connecting to an account aggregation service or engine and, at 115, the account aggregation engine creates an account for the applicant and securely stores the applicant's online banking credential details against it. At 120, the account aggregation engine connects to the applicant's online banking system and, at 125, scrapes the current balance and a certain number of days (e.g., 60 or 90 days) worth of transactions from the applicant's bank account. If the online banking credentials provided by the application are invalid or another error occurs, the account aggregation engine may return an error message and abort the process at 130.

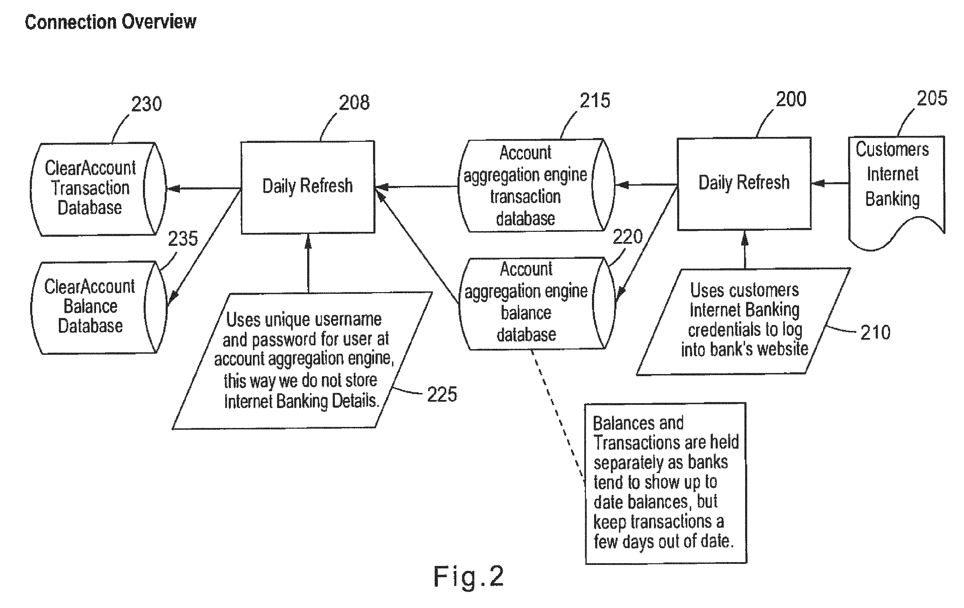

The process of Fig. 1 continues, at 135, by linking or connecting the applicant's bank account with the account created by the account aggregation engine previously at step 115. Fig. 2 illustrates an example of a system diagram for connecting and monitoring the applicant's bank account information, according to an embodiment. This monitored bank account information may include the applicant's current balance and individual transactions, for example. As illustrated in the example of Fig. 2, the applicant's internet banking credentials 205 are used to log into the bank's online banking system or website. In one embodiment, the account aggregation engine performs a daily refresh, at 200, to update the current status of the applicant's account balance and transactions. In one embodiment, the applicant's transactions are stored in a transaction database 215 and the applicant's account balance is stored in a separate balance database 220. An advantage of having separate transaction and balance databases is that banks tend to show up to date account balances, but individual transactions may be a few days out of date. In other embodiments, however, a single database may be used to store both account balance and transactions.

Continuing with Fig. 2, in an embodiment, the process may include, at 208, periodically or daily updating the account created by the account aggregation engine previously at step 115 with the information stored in account transaction database 215 and balance database 220. In one embodiment, the account created by the account aggregation engine may use a unique username and password (e.g., unique from the applicant's internet banking credentials) to access the created account. According to an embodiment, the updated account information can be respectively stored in transaction database 230 and balance database 235.

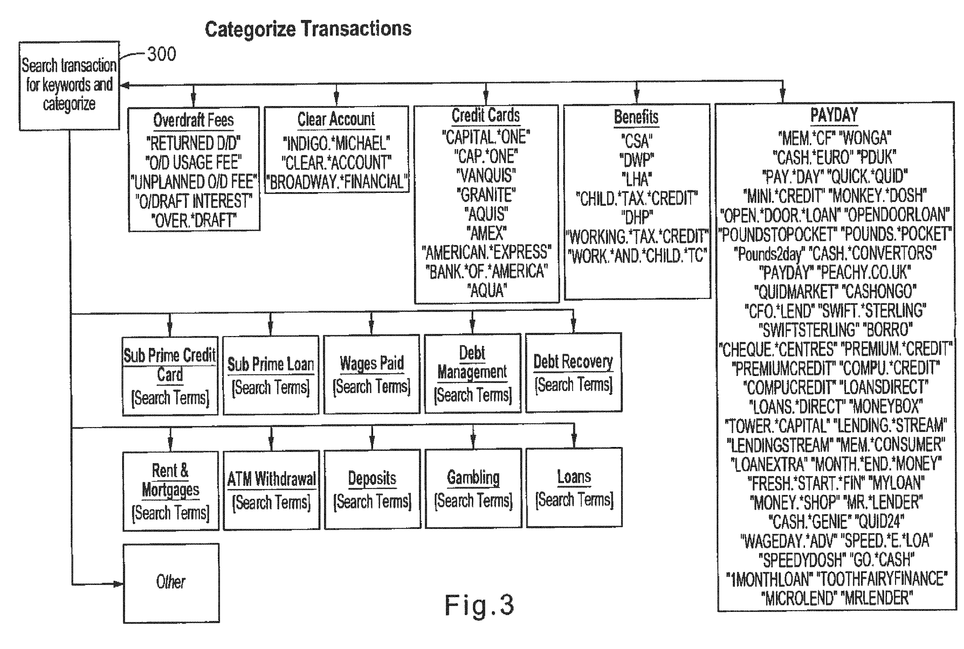

Returning to Fig. 1, at 140, the applicant's transactions are categorized. In particular, as illustrated in Fig. 3, the applicant's banking transactions are searched for certain keywords, at 300, and categorized according to those keywords. For example, as shown in Fig. 3, some categories may include overdraft fees, credit cards, benefits, payday, subprime credit cards, subprime loan, wages paid, debt management, debt recovery, rent & mortgages, ATM withdrawal, deposits, gambling, and loans. In addition, a number of examples of keywords which may be searched are shown within quotes in Fig. 3. It should be noted that embodiments are not limited only to these categories or keywords.

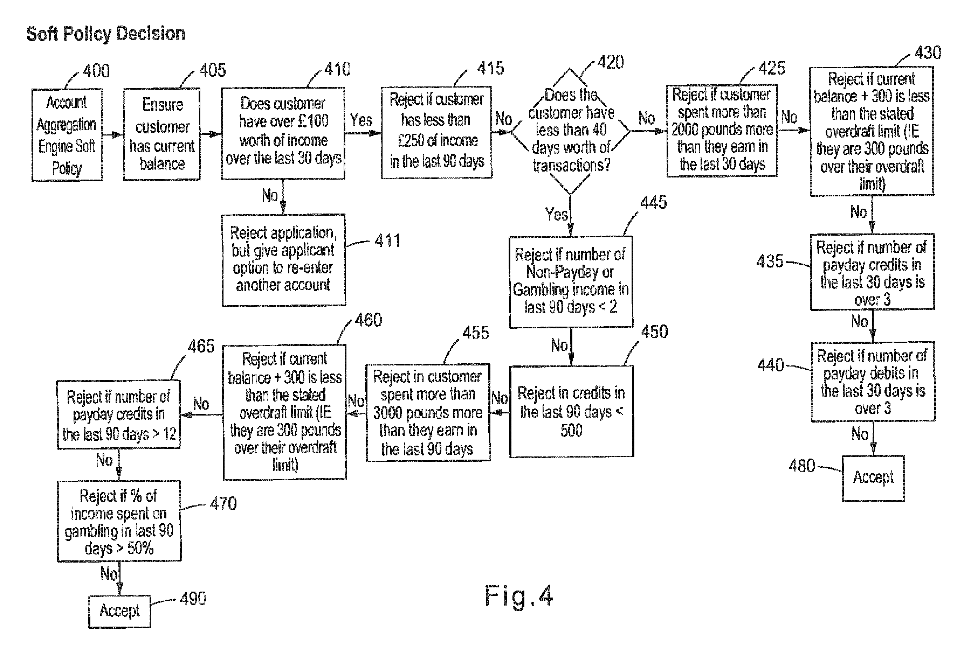

As illustrated in Fig. 1, at 145, an affordability assessment is performed for the applicant. Fig. 4 illustrates an example of a flow diagram of a process for performing an affordability assessment to determine whether the applicant is able to repay a short term loan in a sustainable manner, according to one embodiment. As illustrated in Fig. 4, the process begins at 400 and, at 405, it is determined whether the applicant has a current balance. At 410, it is determined whether the applicant has a certain amount of income over a previous time period. For instance, in one embodiment, it may be determined whether the applicant has between £100 and £200 of income in the prior thirty, sixty, or ninety days, for example. If it is determined that the applicant does not have the certain amount of income over the previous time period, then, at 411, the applicant is rejected but given the option to re-enter another account.

In addition, at 415, it may be determined whether the applicant has less than a certain amount of income (e.g., the certain amount of income may be between £200 and £400) over the previous ninety days, for example. If the applicant is indeed below that income threshold, then the applicant is rejected.

Further, at 420, it is determined whether the applicant has less than a certain number of days' worth of transactions, for example forty or sixty days' worth of transactions. If the applicant does not have less than the certain number of days' (e.g., forty to sixty) worth of transactions, then, at 425, the applicant is rejected if they spent a certain amount (e.g., the certain amount is between £1000 and £2000) more than they earned in the last thirty days.

At 430, if the applicant's current balance + x (e.g., x is between 250 and 350) is less than the stated overdraft limit (i.e., they are x amount over their overdraft limit), then the applicant is rejected. At 435, if the applicant's number of payday credits in the last thirty days is over a certain number (e.g., between 2 and 4 payday credits), then the applicant is rejected. At 440, if the applicant's number of payday debits in the last thirty days is over a certain number (e.g., between 3 and 5 payday debits), then the applicant is rejected. If not, then the applicant may be accepted at 480.

If the applicant does have less than forty days' worth of transactions, then, at 445, the applicant is rejected if their number of non-payday or gambling income in last ninety days is less than a certain number (e.g., between 1 and 4). At 450, the applicant is rejected if the amount of their credits in the last ninety days is less than a certain amount (e.g., between £400 and £600). At 455, the applicant is rejected if they spent a certain amount (e.g., between £2000 and £4000) more than they earned in the last ninety days. At 460, if the applicant's current balance + x (e.g., x is between 250 and 350) is less than the stated overdraft limit (i.e., they are x amount over their overdraft limit), then the applicant is rejected. At 465, the applicant is rejected if their number of payday credits in the last 90 days is greater than a certain number (e.g., between 10 and 14 payday credits). At 470, the applicant is rejected if their percentage of income spent on gambling in the last ninety days exceeds a certain percentage (e.g., between 45% and 55%). If not, then the applicant may be accepted at 490.

Thus, in one embodiment, the result of Fig. 4 may be a yes/no decision as to whether to accept the applicant based on the determinations made during the affordability assessment.

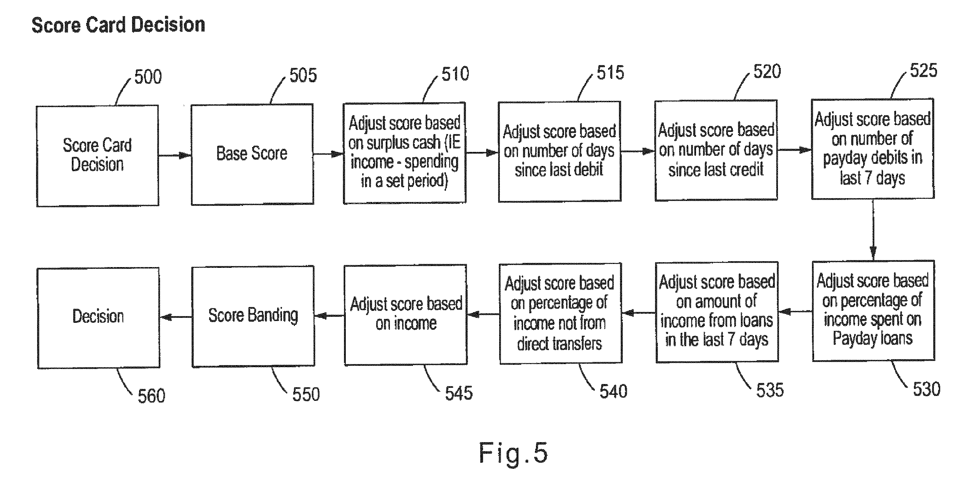

Returning to Fig. 1, at 150, if the applicant passes the affordability assessment, a score card decision may be performed to assign a score to the customer and categorize the application according to the score, and to finally accept or reject the application based on their score categorization. Fig. 5 illustrates an example of a flow diagram of a score card decision, according to one embodiment. In one embodiment, the score card decision may be performed by a statistical model. As illustrated in Fig. 5, the process begins at 500 and, at 505, an initial base score is assigned to the applicant. For example, in one embodiment, the initial base score may be between 550 and 650. At 510, the base score is adjusted based on surplus cash. In other words, in an embodiment, the applicant's spending is subtracted from their income during a set time period. If the applicant has a surplus of income, then their score is adjusted positively. At 515, the applicant's score is adjusted based on the number of days since their last debit. For instance, in one embodiment, the longer the applicant has gone without a debit, the higher or more positively their score will be adjusted. At 520, the applicant's score is adjusted based on number of days since last credit. For example, in one embodiment, the longer the applicant has gone without a credit, the lower or more negatively their score will be adjusted. At 525, the applicant's score is adjusted based on their number of payday debits in the last seven days.

Continuing with Fig. 5, at 530, the applicant's score is adjusted based on their percentage of income spent on payday loans. According to an embodiment, the higher the percentage the more negatively their score will be adjusted. At 535, the applicant's score is adjusted based on their amount of income from loans in the last seven days. Having more income from loans will result in a more negatively adjusted score. At 540, the applicant's score is adjusted based on their percentage of income not from direct transfers. Then, at 545, the applicant's score is adjusted based on their total income. According to an embodiment, each of the score adjustments may adjust the applicants score ±50 to 350.

At 550, score banding is performed in which the applicant's final adjusted score is placed in one of a plurality of categories. For example, in one embodiment, four categories A-D may be provided. The highest or best scores are placed in category A, the next highest in category B, and so on, such that the lowest or worst scores are placed in category D. According to an embodiment, applicants who have scores that are placed in categories A and B are accepted, applicants who have scores that are placed in category C will be manually reviewed, and applicants who have scores that are placed in category D are rejected. Thus, in one embodiment, the result of Fig. 5 may be a yes/no decision as to whether to accept the applicant based on their final score.

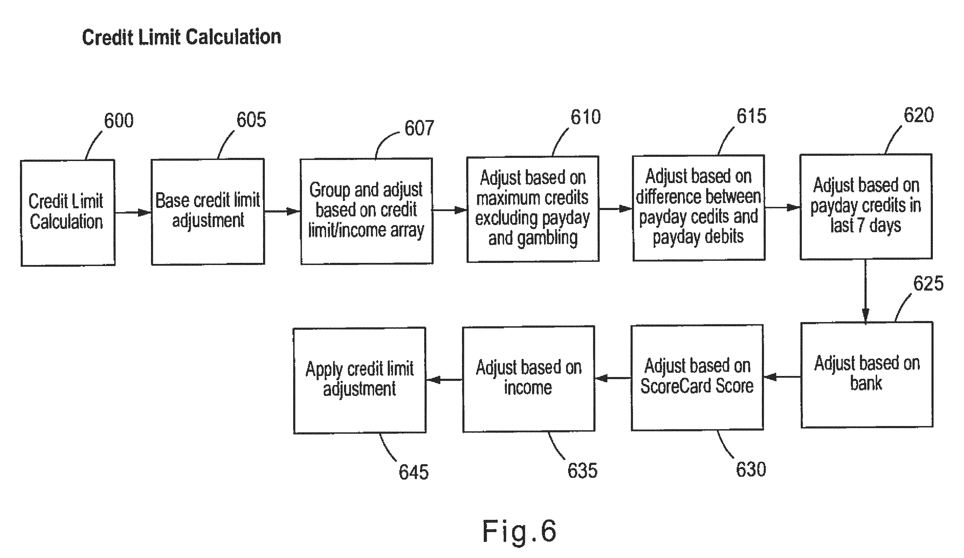

Returning to Fig. 1, at 155, a credit limit calculation is performed in order to determine the amount of credit to extend to an accepted applicant (i.e., customer). In an embodiment, the credit limit calculation illustrated in Fig. 6 may be performed periodically to continually adjust the amount of credit offered to a customer. Specifically, Fig. 6 illustrates an example of a flow diagram of a credit limit calculation process, according to one embodiment. As shown in Fig. 6, the credit limit calculation process begins at 600. At 605, the customer's scored credit limit from Fig. 5 is utilized as the base credit limit in this calculation. At 607, the credit limit is grouped and adjusted based on a credit limit/income array, which includes income and credit limit as indices in the x and y direction, respectively. At 610, the credit limit is adjusted based on maximum credits excluding payday and gambling. At 615, the credit limit is adjusted based on a difference between payday credits and payday debits. At 620, the credit limit is adjusted based on payday credits in the last seven days. At 625, the credit limit is adjusted based on bank. At 630, the credit limit is adjusted based on the customer's final adjusted score as discussed above in Fig. 5. At 635, the credit limit is adjusted based on customer's income. Then, at 645, the adjusted credit limit is applied for the customer.

If the applicant is accepted as a customer based on the determinations made in Figs. 4 and 5 discussed above, then, when the daily refresh shows that the customer's current balance has fallen below a predetermined level where the customer's bank charges overdraft fees, funds are automatically deposited (e.g., based on the calculated credit limit) into the customer's account. Subsequently, when the daily refresh shows that new funds have entered the customer's current account, the repayment amount owed is calculated and the calculated repayment amount is automatically withdrawn from the customer's account in order to repay the outstanding balance.

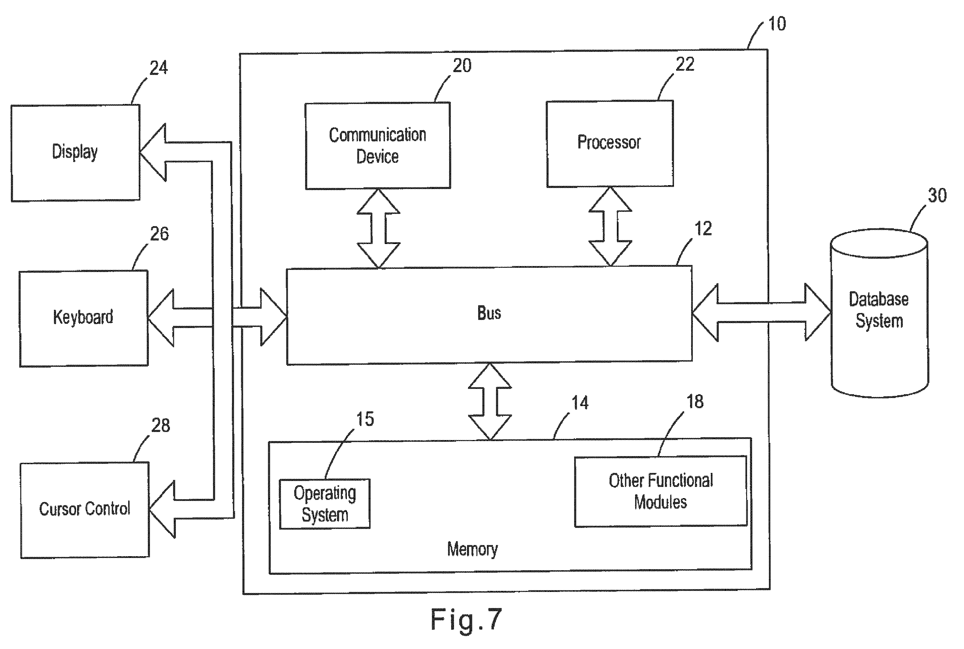

Appropriate means for implementing the invention can be provided by a computerized system. Fig. 7 illustrates an apparatus 10 that may be configured to determine an applicant's eligibility for an overdraft loan, deposit funds prior to a customer being charged overdraft fees, and automatically debiting the customer's account to repay the funds, according to one embodiment. In some embodiments, apparatus 10 is implemented as a component of a network, such as a server in a communications network. In other embodiments, the apparatus 10 may be implemented in an electronic device, such as a computing system, wireless communications device, tablet, or any other device with a processor and/or memory.

Apparatus 10 may include a communications interface 12, such as a bus or other communications mechanism, for communicating information between components of apparatus 10. Alternatively, the components of apparatus 10 may communicate directly with each other, without use of communications interface 12.

Apparatus 10 also includes at least one processor 22, coupled to communications interface 12, for receiving, managing, and/or processing network or user input or information, and for executing instructions or operations. Processor 22 may be any type of general or specific purpose processor. In one embodiment, processor 22 may be included within an application specific integrated circuit (ASIC).

Apparatus 10 further includes a memory 14 for storing information and instructions to be executed by processor 22. Memory 14 can be comprised of any combination of random access memory (RAM), read only memory (ROM), static storage such as a magnetic or optical disk, or any other type of machine or computer readable media.

Computer readable media may be any available media that can be accessed by processor 22 and could include volatile or nonvolatile media, removable or non-removable media, and communication media. Communication media may include computer program code or instructions, data structures, program modules or other data, and includes any information delivery media.

Processor 22 can further be coupled, via communications interface 12 or directly, to a graphical user interface or display 24, such as liquid crystal display (LCD) or a thin film transistor (TFT) LCD, for displaying information to a user. Any type of display capable of presenting information to the user may be used, according to certain embodiments of the invention.

Apparatus 10 further includes a communication device 20, such as a transceiver, antenna, or network interface card or other communications interface, to provide access to and facilitate communications with a network. Additionally, communication device 20 may facilitate the receipt of information from a user or the network, and the transmission of information to the user or network. As a result, a user may interface with apparatus 10 directly or remotely through the network or any other method.

In one embodiment, memory 14 stores software modules or applications that provide functionality when executed by processor 22. The modules may include an operating system 15 that provides operating system functionality for apparatus 10. The memory 14 may also store other functional modules or applications 18, such as modules configured to perform the affordability assessment, score card decision, and/or credit limit calculation, as discussed above.

Processor 22 and memory 14 may also be coupled via bus 12 to a database system 30 and, thus, may be able to access and retrieve information stored in database system 30. Although only a single database is illustrated in Fig. 7, any number of databases may be used in accordance with certain embodiments, as discussed above in connection with Fig. 2. In some embodiments, database system 30 may store applicant and/or customer banking and/or transaction information. In one example, database system 30 is configured to store, update, and retrieve data in response to SQL-formatted commands.

Database system 30 may include a database server and any type of database, such as a relational or flat file database. Database system 30 may store data used for performing any of the processes described above with respect to Figs. 1-6.

According to one embodiment, apparatus 10 is configured to receive an electronic application form including credentials from an applicant. In accordance with an embodiment the electronic application form includes banking credentials. Apparatus 10 may then be configured to receive or retrieve, using the credentials, information relating to the applicant. For example, information such as the current balance and a certain number of days (e.g., 60 or 90 days) worth of transactions for the applicant can be received or retrieved from a database or the applicant's bank account.

In an embodiment, apparatus 10 can be further configured to categorize the transactions into a plurality of categories (e.g., overdraft fees, credit cards, deposits, gambling, loans) by searching the transactions for keywords, and to perform an affordability assessment to reject applications that cannot afford to repay in a sustainable manner. If the applicant passes the affordability assessment, apparatus 10 may be configured to perform a score card decision to assign a score to the customer and categorize the application according to the score, and to finally accept or reject the application based on their score categorization. If the application is accepted, apparatus 10 may be configured to periodically calculate a credit limit for the customer, and may also perform a daily refresh to update the latest (e.g., 24 or 48 hours) transactions and to update the current balance for the customer. In one embodiment, the daily refresh can be synchronized to perform, for example, at least 1 hour before the customer's bank schedules the charging of overdraft fees.

Further, according to an embodiment, when the daily refresh shows that the customer's current balance has fallen below a predetermined level where the customer's bank charges overdraft fees, apparatus 10 is configured to automatically deposit funds (e.g., based on the calculated credit limit) into the customer's account. Subsequently, when the daily refresh shows that new funds have entered the customer's current account, apparatus 10 is configured to calculate the repayment amount and automatically attempt to withdraw funds in order to repay the outstanding balance.

It is appreciated that although the above describes particular examples in relation to processing of electronic application forms for banking operations, the invention is applicable for processing other applications as well. For example, an electronic application can be processed by a computerized system in the context planning and/or building consents, security clearances, event permissions, licenses, job applications, applications for grants, applications for insurance products and so on. The credentials can be any credentials associated with the applicant and/or the subject of the application, such as plans for a new building or other construction and/or applicant details. The transactions can be any transactions, e.g. in the building consent example transactions such as previous applications, consents, decisions and enquiries. The credit limit of certain embodiments can be for any kind of credit, for example an account by a supplier of goods.

In view of the above, embodiments of the invention provide a secure and convenient way for customers to have their electronic applications processed. For example, a secure and convenient access to a flexible short term credit line may be provided.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the scope of the invention. In order to determine the metes and bounds of the invention, therefore, reference should be made to the appended claims.

## Claims

1. A method in a computerized application processing system, comprising:
receiving an electronic application form comprising credentials of an applicant;
retrieving, based on the credentials, a certain number of transactions for the applicant from at least one database;
categorizing the transactions into a plurality of categories by searching the transactions for keywords;
performing a soft policy decision on the electronic application form based on the categorization to reject or tentatively approve the application;
when the application passes the soft policy decision performing a scorecard decision to assign a score to the applicant and categorizing the applicant according to the score; and
accepting or rejecting the electronic application based on the score categorization.

2. The method according to claim 1, further comprising:
when the applicant is accepted as a customer based on the score categorization, periodically calculating a credit limit for the customer.

3. The method according to claims 1 or 2, further comprising:
performing a daily refresh to update latest transactions and current balance for the customer.

4. The method according to claim 3, wherein the daily refresh is synchronized to perform at least 1 hour before the customer's bank schedules a charging of overdraft fees and/or when the daily refresh shows that the customer's current balance has fallen below a predetermined level where customer's bank charges the overdraft fees, automatically depositing funds into the customer's account.

5. The method according to claim 4, wherein an amount of the deposited funds is based on the calculated credit limit and/or wherein, when the daily refresh shows that new funds have entered the customer's current account, calculating a repayment amount and automatically attempting repayment on an outstanding balance corresponding to the amount of the deposited funds.

6. The method according to any preceding claim, wherein the certain number of transactions comprise a certain number of days' worth of transactions.

7. The method according to any preceding claim, wherein the electronic application form comprises banking credentials of the applicant, the method comprising retrieving, based on the banking credentials, a current balance and a certain number of banking transactions for the applicant, and wherein the performing of a soft policy decision comprises performing an affordability assessment to reject the applicant in response to determination that that the applicant cannot afford to repay in a sustainable manner.

8. The method according to any preceding claims, wherein the categories comprise at least one of overdraft fees, credit cards, benefits, payday, subprime credit cards, subprime loan, wages paid, debt management, debt recovery, rent & mortgages, ATM withdrawal, deposits, gambling, or loans.

9. An apparatus, comprising:
at least one processor; and
at least one memory comprising computer program code,
the at least one memory and the computer program code configured, with the at least one processor, to cause the apparatus at least to
receive an electronic application form comprising credentials of an applicant;
retrieve, based on the credentials, a certain number of transactions for the applicant from at least one database;
categorize the transactions into a plurality of categories by searching the transactions for keywords;
perform a soft policy decision based on the categorization on the electronic application form to reject or tentatively approve the application;
when the application passes the soft policy decision, perform a scorecard decision to assign a score to the applicant and categorize the applicant according to the score; and
accept or reject the electronic application based on the score categorization.

10. The apparatus according to claim 9, wherein the at least one memory and the computer program code are further configured, with the at least one processor, to cause the apparatus to, when the applicant is accepted as a customer based on the score categorization, periodically calculate a credit limit for the customer and/or to cause the apparatus to perform a daily refresh to update latest transactions and current balance for the customer.

11. The apparatus according to claim 9 or 10, wherein the at least one memory and the computer program code are further configured, with the at least one processor, to cause the apparatus to, when the daily refresh shows that the customer's current balance has fallen below a predetermined level where customer's bank charges the overdraft fees, automatically depositing funds into the customer's account.

12. The apparatus according to claim 11, wherein an amount of the deposited funds is based on the calculated credit limit and/or wherein, when the daily refresh shows that new funds have entered the customer's current account, the at least one memory and the computer program code are further configured, with the at least one processor, to cause the apparatus to calculate a repayment amount and automatically attempt repayment on an outstanding balance corresponding to the amount of the deposited funds.

13. The apparatus according to any of claims 9 - 12, wherein the certain number of transactions comprise a certain number of days' worth of transactions.

14. The apparatus according to any of claims 9 - 13, wherein the electronic application form comprises banking credentials of the applicant, the apparatus being configured retrieve, based on the banking credentials, a current balance and a certain number of banking transactions for the applicant and to perform an affordability assessment to reject the applicant in response to determination that that the applicant cannot afford to repay in a sustainable manner.

15. A computer program, embodied on a computer readable medium, the computer program configured to control a processor to perform a process comprising the steps of any of claims 1 to 8.
